# EUROPÄISCHE PATENTSCHRIFT

(11) **EP 0 518 226 B1**
(45) Veröffentlichungstag und Bekanntmachung des Hinweises auf die Patenterteilung: **30.08.1995**
(21) Anmeldenummer: 92109512.1
(22) Anmeldetag: 05.06.1992
(51) Int. Cl.: B60G 17/04

(54) **Landwirtschaftlich nutzbare Zugmaschine mit angelenktem Hubwerk**
Farm tractor with a lifting gear
Tracteur agricole avec dispositif de levage

(30) Priorität: 13.06.1991 DE 4119414
(43) Veröffentlichungstag der Anmeldung: 16.12.1992
(73) Patentinhaber: ROBERT BOSCH GMBH, 70442 Stuttgart (DE)
(72) Erfinder: Altmann, Uwe, Dipl.-Ing., W-7141 Schwieberdingen (DE); Hesse, Horst, Dr.-Ing., W-7000 Stuttgart 1 (DE); Loedige, Heinrich, Dipl.-Ing., W-7143 Vaihingen/Enz (DE)

(56) Entgegenhaltungen:
- WO-A-84/04284
- WO-A-90/13448
- DE-A- 2 038 821
- DE-A- 3 723 488
- SOVIET INVENTIONS ILLUSTRATED Section PQ, Week 8648, 11. Dezember 1986 Derwent Publications Ltd., London, GB; Class Q12, AN 86-317165/48 & SU-A- 1220936 (BELORUSSIAN POLY) 30. März 1986

## Beschreibung

Die Erfindung geht aus von einer landwirtschaftlich nutzbaren Zugmaschine, insbesondere Traktor oder Baumaschinen-Fahrzeug mit einem am Fahrzeug angelenkten Hubwerk nach der Gattung des Hauptanspruchs.

Aus der DE-OS 37 23 488 ist schon eine solche als Traktor ausgebildete Zugmaschine bekannt, bei der am Traktorrahmen ein Anbaugerät bzw. eine Anbaumasse gelenkig befestigt ist und über eine elektrohydraulische Hubwerks-Regeleinrichtung während der Fahrt so verstellt wird, daß eine aktive Dämpfung von Nick- bzw. Hub-Schwingungen des Traktors erreicht wird. Auf diese Weise lassen sich die beim Traktor während der Transportfahrt mit angehobenen Anbaugerät durch Bodenunebenheiten hervorgerufenen dynamische Radlastschwankungen an der Vorderachse erheblich verringern und somit die Lenksicherheit des Traktors verbessern bzw. es kann die Geschwindigkeit des Traktors entsprechend erhöht werden. Dabei wird durch eine geeignete, voreilende Steuerung der Bewegungsgröße des Anbaugeräts relativ zu derjenigen des Traktors eine optimale Dämpfung der angeregten Nickschwingung des Traktors erreicht. Während bei derartigen Zugmaschinen in der Regel ein angelenktes Arbeitsgerät bzw. ein Ballast als Tilgermasse zur Verfügung steht, tritt zunehmend auch der Fall auf, daß bei Transportfahrten des Traktors weder heckseitig noch frontseitig ein angelenktes Anbaugerät vorliegt und trotzdem erhöhte Forderungen hinsichtlich Fahrsicherheit und Fahrkomfort vom Traktor erfüllt werden sollen. Auch ist der vorbekannte Traktor nur mit ungefederten Achsen ausgerüstet die sich für schnellfahrende Zugmaschinen bzw. Baumaschinen-Fahrzeuge weniger eignen.

Ferner ist aus der DE-OS 21 49 369 ein Traktor mit einer elektrohydraulischen Hubwerks-Regeleinrichtung für einen angelenkten Pflug bekannt, bei dem zur Verbesserung der Fahreigenschaften die Vorder- wie auch die Hinter-Achse federnd am Fahrzeugrahmen abgestützt sind. Bei diesen Traktor wird versucht, die während des Pflügens auftretenden Störungen der Kraftheberregelung infolge der federnd abgestützten Achsen zu verringern. Dazu wirken an beiden Achsen angeordnete, die Nickbewegungen des Traktors erfassende Sensoren auf die Kraftheberregelung in einer Weise ein, daß die Nickbewegung des Anbaugeräts verringert wird. Eine Einrichtung zur Schwingungsdämpfung von Nickschwingungen des Traktors bei Transportfahrten mit ausgehobenem Anbaugerät ist nicht vorgesehen. Auch sind beide Achsen des Traktors über mechanische Federn am Fahrzeugrahmen aufgehängt.

Weiterhin ist aus der SU-A-1 220 936 ein Traktor bekannt, der ein Front- und ein Heckhubwerk aufweist, in deren hydraulisch angesteuerten Krafthebern jeweils ein Drucksensor angeordnet ist, die lastabhängige Signale liefern. Die Vorderachse des Traktors ist über eine hydropneumatisches Federbein am Traktorgehäuse abgestützt, wobei dessen als Feder wirkender Gasraum über eine elektropneumatische Einrichtung ansteuerbar ist, und dabei ein Sensor den Druck im Gasraum mißt. Durch Druckänderungen in diesem Gasraum abhängig von den Signalen der lastabhängigen Drucksensoren an den Krafthebern wird die Federungscharakteristik der Vorderachse an die jeweiligen Lasten zum Zwecke einer Niveauregulierung angepaßt. Eine aktive Schwingungstilgung mit einer elektrohydraulischen Hubwerks-Regeleinrichtung ist hier nicht möglich und auch nicht beabsichtigt.

### Vorteile der Erfindung

Die erfindungsgemäße landwirtschaftlich nutzbare Zugmaschine, insbesondere Traktor oder Baumaschinen-Fahrzeug mit einer Einrichtung zur dynamischen Stabilisierung seiner Bewegungen mit den kennzeichnenden Merkmalen des Hauptanspruchs hat demgegenüber den Vorteil, daß für die aktive Dämpfung von angeregten Nickschwingungen des Fahrzeugs die hydropneumatisch abgestützte, federnde Fahrzeugachse als Tilgermasse genommen wird, so daß mit geringen zusätzlichem Aufwand eine wesentliche Verbesserung der Fahreigenschaften erzielbar ist. Besonders günstig eignet sich hierfür die Vorderachse des Fahrzeugs, wodurch der Bodenkontakt der gelenkten Räder wesentlich erhöht wird.

Der bei einer hydropneumatischen Federung ohnedies vorhandene Hydrozylinder ist hydraulisch leicht verstellbar und somit kostengünstig für eine Schwingungsdämpfung einsetzbar.

Durch die in den Unteransprüchen aufgeführten Maßnahmen sind vorteilhafte Weiterbildungen und Verbesserungen des im Hauptanspruch angegebenen Fahrzeugs möglich. Besonders einfache, kostengünstige Ausführungsformen und sicher arbeitende Systeme werden ermöglicht, wenn die Sensoren zur Ermittlung der schwingungsabhängigen Signale nach den Ansprüchen 2 bis 6 ausgebildet werden, wobei eine Aufhängung der hydraulischen Stellglieder über Kraftmeßbolzen nach Anspruch 3 besonders vorteilhaft ist. Ferner ist eine Ausbildung nach Anspruch 7 mit überlagertem Lageregelkreis äußerst zweckmäßig wodurch der Abstand zwischen gefederter Fahrzeugachse und Fahrzeugrahmen im Mittel konstant gehalten wird und somit ein Wegdriften eines Teils relativ zum anderen vermieden wird. Eine wirksame Stabilisierung bei relativ einfacher Bauweise läßt sich gemäß Anspruch 8 erreichen, in dem jedem Rad ein hydraulisches Stellglied zugeordnet wird. Vorteilhaft ist es ferner, wenn gemäß Anspruch 9 einfachwirkende Stellglieder verwendet werden, wodurch die Einrichtung kostengünstig baut. Zweckmäßig ist ferner eine Ausbildung nach Anspruch 10 mit doppeltwirkenden Stellgliedern, die eine wirksamere Dämpfung erlauben, weil ihre Kolben beidseitig hydraulisch eingespannt sind. Vorteilhaft sind ferner Ausführungsformen nach den Ansprüchen 11 und 12, wo durch Schalten von Ventilen der gefederten Achse verschiedene Charakteristiken verliehen werden können, um dergestalt z.B. Funktionen wie gefederte Achse, Pendelachse oder starre Achse zu erreichen. Äußerst kostengünstig ist ferner eine Ausführungsform nach Anspruch 14, wenn das bei einer elektrohydraulischen Hubwerks-Regeleinrichtung ohnedies vorhandene Regelventil zusätzlich für die Einrichtung zur Schwingungsdämpfung verwendet wird. Vorteilhaft ist ferner eine Ausbildung nach Anspruch 15, die eine energiesparend arbeitende Einrichtung erlaubt, bei welcher beim Schwingen des Fahrzeugs auftretende Energie in das hydraulische System zurückgeführt werden kann. Weitere besonders vorteilhafte Ausgestaltungen ergeben sich aus den übrigen Ansprüchen, der Beschreibung sowie der Zeichnung.

### Zeichnung

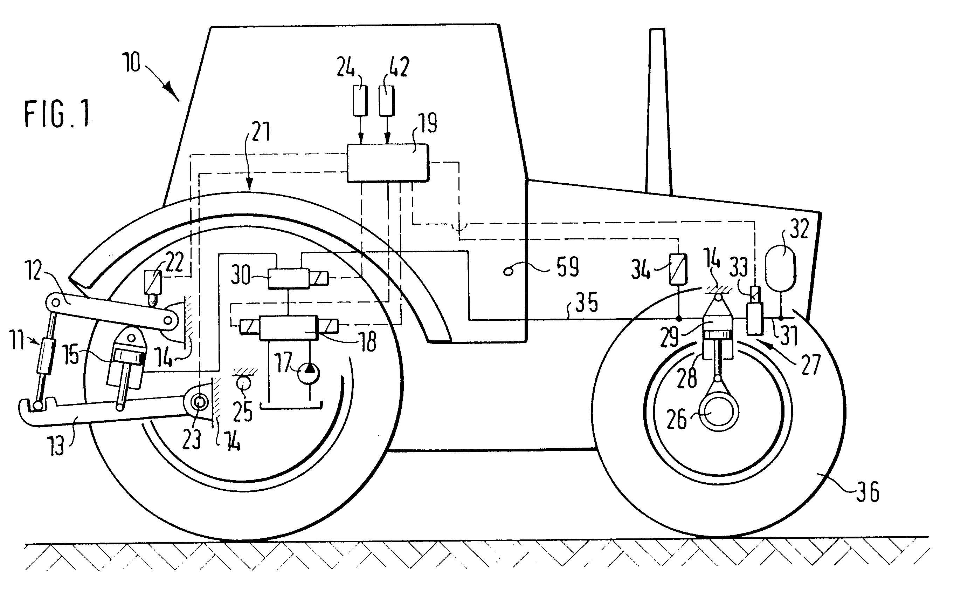

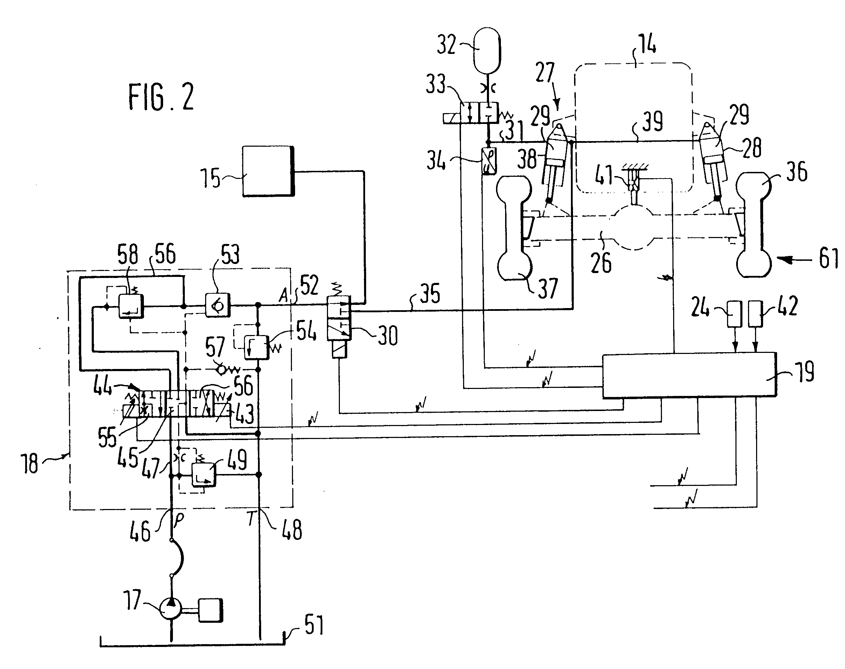

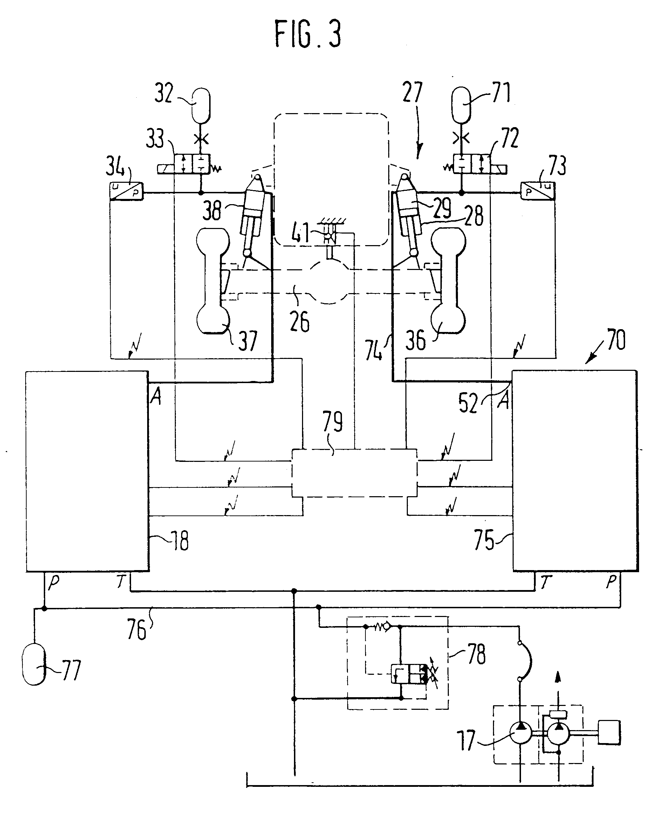

Vier Ausführungsbeispiele der Erfindung sind in der Zeichnung dargestellt und in der nachfolgenden Beschreibung näher erläutert. Es zeigen Figur 1 einen Traktor in Seitenansicht mit einem ersten Ausführungsbeispiel nach der Erfindung in vereinfachter Darstellung, Figur 2 einen Längsschnitt durch die hydropneumatisch gefederte Vorderachse mit zugehöriger Einrichtung nach Figur 1 in vereinfachter Darstellung und die Figuren 3, 4 und 5 jeweils ein zweites, drittes bzw. viertes Ausführungsbeispiel der Erfindung.

### Beschreibung der Ausführungsbeispiele

In der Figur ist als landwirtschaftlich nutzbare Zugmaschine ein Traktor 10 in Seitenansicht und in vereinfachter Form dargestellt, der zum Anlenken eines nicht näher gezeichneten Anbaugeräts ein heckseitig angeordnetes Hubwerk 11 aufweist. Das Hubwerk 11 weist dabei in an sich bekannter Weise ein Dreipunktgestänge mit Oberlenker 12 und Unterlenker 13 auf, die beide schwenkbar an einem Fahrzeugrahmen 14 des Traktors 10 befestigt sind. Zur Höhenverstellung eines Anbaugeräts greift am Unterlenker 13 ein hydraulischer Kraftheber 15 an, der in einen hydraulischen Kreis 16 mit einer Pumpe 17 und einem elektrohydraulischen Regelventil 18 geschaltet ist. Das Regelventil 18 wird über ein elektronisches Steuergerät 19 angesteuert, das ebenso wie das Regelventil 18 und das Hubwerk 11 Teil einer elektrohydraulischen Hubwerks-Regeleinrichtung 21 ist. Die Lage eines nicht näher gezeichneten Anbaugeräts, wie z.B. eines Pfluges, wird von einem am Oberlenker 12 angreifenden Lagesensors 22 aufgenommen, der entsprechende Istwertsignale an das elektronische Steuergerät 19 liefert. Ferner ist der Unterlenker 13 über einen elektromechanischen Kraftmeßbolzen 23 angelenkt, der zugkraftabhängige Signale an das Steuergerät 19 weitergibt. Die Sollwerte zur Hubwerks-Regelung werden am Geber 24 eingegeben. Mit Hilfe der elektrohydraulischen Hubwerks-Regeleinrichtung 21 kann ein am Hubwerk 11 angelenktes Anbaugerät nicht nur in Betriebsstellungen in verschiedenen Regelungsarten betrieben werden, sondern es kann das Hubwerk 11 auch aus der Betriebsstellung heraus in die gezeichnete Aushubstellung verfahren werden, wie dies bei Transportfahrten des Traktors 10, insbesondere bei höheren Geschwindigkeiten, üblich ist.

Wie die Figur 1 in vereinfachter Form zeigt, ist die Hinterachse 25 des Traktors 10 ungefedert am Fahrzeugrahmen 14 gelagert. Demgegenüber ist die Vorderachse 26 über eine hydropneumatische Federung 27 am Fahrzeugrahmen 14 abgestützt. Die Federung 27 weist dabei als Kräfte übertragendes Stellglied zwischen Fahrzeugrahmen 14 und Vorderachse 26 einen Hydrozylinder 28 auf, dessen Druckraum 29 über eine hydraulische Verbindung 31 mit einem als Federelement dienenden, hydropneumatischen Energiespeicher 32 verbunden ist. In die hydraulische Verbindung 31 zwischen Stellglied 28 und Energiespeicher 32 ist ein Magnetventil 33 geschaltet, das ebenfalls vom elektrischen Steuergerät 19 her ansteuerbar ist. Ferner wird der Druck im Druckraum 29 von einem elektrohydraulischen Drucksensor 34 abgegriffen, der entsprechende Ausgangssignale an das Steuergerät 19 gibt. Ferner ist zum Verstellen des Hydrozylinders 28 dessen Druckraum 29 über eine hydraulische Leitung 35 mit einem Umschaltventil 30 verbunden, das vom elektronischen Steuergerät 19 ansteuerbar ist und das Regelventil 18 wahlweise mit dem Kraftheber 15 oder dem Stellglied 28 verbindet.

Die Figur 2 zeigt einen Längsschnitt durch die Vorderachse 26 mit der hydropneumatischen Federung 27 und der zugehörigen Einrichtung nach Figur 1 in vereinfachter Darstellung. Wie Figur 2 näher zeigt, ist jedem Rad der Vorderachse 26 ein eigener Hydrozylinder zugeordnet, wobei dem rechten Vorderrad 36 der erste Hydrozylinder 29 zugeordnet ist. Auf der anderen Seite der Vorderachse 26 ist das linke Vorderrad 37 durch einen zweiten Hydrozylinder 38 am Fahrzeugrahmen 14 abgestützt. Die beiden Hydrozylinder 28, 38 sind untereinander baugleich und jeweils als einfachwirkende Zylinder ausgebildet wobei jeweils die große wirksame Fläche des Kolbens den Druckraum 29 begrenzt. Die Druckräume 29 beider Hydrozylinder 28, 38 sind über eine Querleitung 39 miteinander hydraulisch verbunden und stehen gemeinsam über die Leitung 35 mit dem Regelventil 18 sowie die hydraulische Verbindung 31 mit dem hydropneumatischen Energiespeicher 32 in Verbindung. Die Lage der gefederten Vorderachse 26 relativ zum Fahrzeugrahmen 14 wird von einem elektromechanischen Wegaufnehmer 41 abgegriffen, der seine Signale ebenfalls an das elektronische Steuergerät 19 gibt. Während die Sollwerte für die Hubwerks-Regeleinrichtung 21 über den ersten Geber 24 dem Steuergerät 19 eingegeben werden, steht für die Vorgabe von Sollwerten für die aktive Schwingungsdämpfung ein zweiter Geber 42 zur Verfügung.

Bei dem Regelventil 18 handelt es sich um ein an sich bekanntes Drei-Wege-Ventil, wie es zur proportionalen und lastdruckunahbängigen Steuerung von Volumenströmen in elektrohydraulischen Hubwerks-Regeleinrichtungen verwendet wird. Das Regelventil 18 weist einen von Proportionalmagneten 43 betätigten Steuerschieber 44 auf, der in einer Mittelstellung 45 einen Steuerölstrom von einem Zulaufanschluß 46 über eine Drosselstelle 47 zu einem Rücklaufanschluß 48 erlaubt, wodurch eine als Umschaltventil wirkende Druckwaage 49 den restlichen Teilstrom von der Pumpe 17 unmittelbar zum Tank 51 entlastet. Ein mit A bezeichneter Motoranschluß 52 ist dabei durch ein entsperrbares Rückschlagventil 53 abgesperrt und durch ein Druckbegrenzungsventil 54 abgesichert. Wird der Steuerschieber 44 in eine Hebenstellung 55 ausgelenkt, so wird ein proportionaler Volumenstrom vom Zulaufanschluß 46 über den Steuerschieber 44, die Motorleitung 56 und das entsperrbare Rückschlagventil 53 zum Motoranschluß 52 gesteuert, von wo er über das geöffnete Umschaltventil 30 zum Kraftheber 15 fließen kann. Die Druckwaage 49 sorgt hierbei in bekannter Weise für eine lastdruckkompensierte Steuerung des Volumenstroms. Wird der Steuerschieber 44 in entgegengesetzter Richtung in Richtung Senkenstellung 46 ausgelenkt, so wird durch einen Steuerölstrom über ein Vorspannventil 57 ein Zwischendruck angedrosselt, der zum Entsperren des Rückschlagventils 53 ausreicht und der zudem auf ein Druckkompensationsventil 58 einwirkt. Beim Senken strömt vom Kraftheber 15 kommendes Druckmittel vom Motoranschluß 52 über das entsperrte Rückschlagventil 53, das Druckkompensationsventil 58 und den in Senkenstellung 56 befindlichen Steuerschieber 44 zum Rücklaufanschluß 48, wobei über das Druckkompensationventil 58 ein lastdruckkompensierter Senkenvorgang steuerbar ist. Wenn das elektronische Steuergerät 19 abhängig von den am Geber 24 vorgegebenen Werten das Umschaltventil 30 in seine gezeichnete Stellung steuert, kann das elektrohydraulische Regelventil 18 in üblicher Weise für die Hubwerks-Regelung verwendet werden.

Beim Fahren des Traktors 10 über unebenes Gelände, vor allem bei Transportfahrten mit hoher Geschwindigkeit treten infolge der Federeigenschaften der Hinterräder und der hydropneumatisch gefederten Vorderachse 26 vor allem Nickschwingungen des Traktors 10 um eine horizontale Querachse 59 auf, die besonders bei schnellfahrenden Ackerschleppern die Fahrsicherheit infolge verringerten Fahrbahnkontakts der Vorderräder und den Fahrkomfort nachteilig beeinflussen.

Diese Nick- und Vertikalschwingungen führen infolge der Massenträgheit von Fahrzeugrahmen 14 und Vorderachse 26 zu Beschleunigungskräften, die ihrerseits in den Druckräumen 29 der beiden Hydrozylinder 28, 38 zu Druckänderungen führen. Diese Druckänderungen werden vom Drucksensor 34 aufgenommen, der entsprechend elektrische Signale an das elektronische Steuergerät 19 weiter gibt. Diese Signale werden zur Ermittlung des jeweiligen Schwingungszutandes des Traktors 10 herangezogen und werden vom elektronischen Steuergerät 19 als Istwerte im Regelkreis zur aktiven Schwingungsdämpfung verarbeitet. Mit Hilfe des zweiten Gebers 42 wird dabei die Einrichtung zur Schwingungsdämpfung eingeschaltet und es werden entsprechende Sollwerte vorgegeben. Das elektronische Steuergerät 19 schaltet dabei das Umschaltventil 3o in seine andere Schaltstellung, wodurch der Motoranschluß 52 des Wegeventils 18 über die Leitung 35 an die Hydrozylinder 28, 38 der hydropneumatischen Federung angeschlossen werden. Mit Hilfe des als elekronischer Regler arbeitenden Steuergeräts 19 wird nun das mit den Stellgliedern 28, 38 hydraulisch verbundene Regelventil 18 so angesteuert, daß eine angeregte Schwingung des Fahrzeugrahmens 14, insbesondere dessen Nickschwingungen um die Querachse 59, aktiv abgebaut werden. Dabei wird die Masse der ohnedies vorhandenen, hydropneumatisch abgestützten Vorderachse 26 als Tilgermasse für die Schwingungsdämpfung verwendet, so daß die Bedämpfungseinrichtung am Traktor 10 auch ohne zusätzliche Anbaumasse am Hubwerk 11 wirksam werden kann. Mit Hilfe des Wegaufnehmers 41 und einer der aktiven Schwingungstilgung überlagerten Lageregelung wird der Abstand von Fahrzeugrahmen 14 und Vorderachse 26 im Mittel konstant gehalten.

Das als elektronischer Regler arbeitende Steuergerät 19, das elektrohydraulische Regelventil 18 sowie die beiden hydraulischen Stellglieder 28, 38 der hydropneumatischen Federung 27 sind somit Teile einer elektrohydraulischen Regeleinrichtung 61 zur aktiven Schwingungsdämpfung, deren prinzipielle Arbeitsweise aus der eingangs genannten DE-OS 37 23 488 bekannt ist und auf die hier ausdrücklich Bezug genommen wird.

Die Figur 3 zeigt in vereinfachter Darstellung eine zweite Ausführungsform eines zweiten elektrohydraulischen Regelsystems 70, das sich von dem Regelsystem 61 nach Figur 2 wie folgt unterscheidet, wobei für gleiche Bauelemente gleiche Bezugszeichen verwendet werden:

Bei dem zweiten Regelsystem 70 wird jedes der beiden Vorderräder 36, 37 getrennt voneinander mit einer jeweils eigenen Regeleinrichtung aktiv bedämpft. Zu diesem Zweck ist die hydropneumatische Federung 27 der Vorderachse 26 für den ersten Hydrozylinder 28 ebenfalls mit einem Energiespeicher 71, einem zwischengeschalteten Magnetventil 72 und einem Drucksensor 73 ausgerüstet. Eine Querleitung zwischen den beiden Druckräumen 29 beider Hydrozylinder 28, 38 entfällt. Der Druckraum 29 des ersten Hydrozylinders 28 steht dafür über eine zweite Leitung 74 mit dem Motoranschluß 52 eines zweiten elektrohydraulischen Regelventils 75 in Verbindung, das mit dem anderen, ersten Regelventil 18 baugleich ist. Beide Regelventile 18, 75 sind parallel an ein Konstantdrucknetz 76 mit Hydrospeicher 77 angeschlossen, das von der Pumpe 17 über ein Speicherladeventil 78 mit Druckmittel versorgt wird. Durch die Verwendung der Regelventile 18, 75 in einem Konstantdrucknetz 76 muß lediglich in Mittelstellung 45 des Regelschiebers 44 die in Figur 2 offene Verbindung für den Steuerumlauf blockiert werden. Die gleichzeitige Druckmittelversorgung einer elektrohydraulischen Hubwerks-Regeleinrichtung ist nicht vorgesehen. Das als Regler arbeitende elektronische Steuergerät 79 erhält nun die Signale aus beiden Druckgebern 34, 73 und steuert dementsprechend die Regelventile 18, 75 getrennt voneinander so, daß jede Seite (36, 37) der hydropneumatischen Federung 27 unabhängig voneinander in aktiver Weise bedämpft wird. Das Regelsystem 70 zur aktiven Schwingungsdämpfung kann auf diese Weise schneller und wirksamer arbeiten.

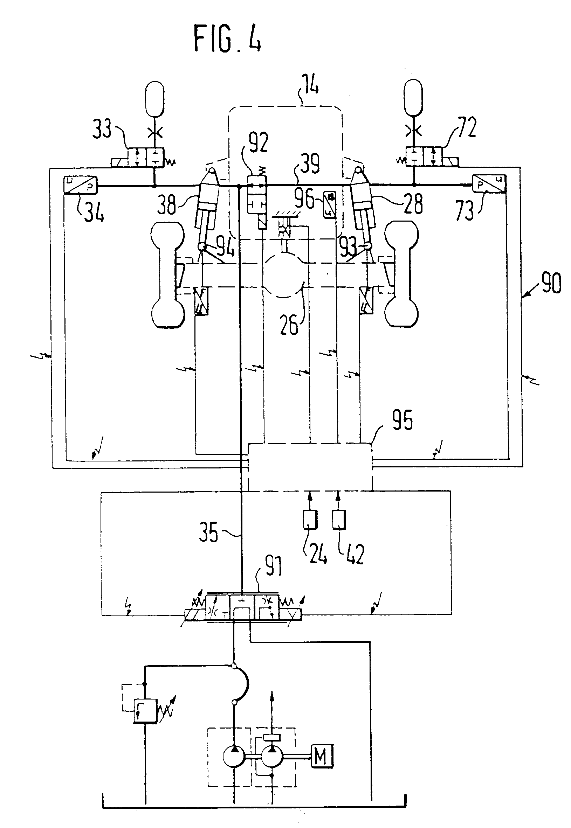

Die Figur 4 zeigt als weitere Ausführungsform ein drittes elektrohydraulisches Regelsystem 90, das sich von dem zweiten Regelsystem 70 nach Figur 3 wie folgt unterscheidet, wobei für gleiche Bauelemente gleiche Bezugszeichen verwendet werden:

Das dritte Regelsystem 90 arbeitet insgesamt im Vergleich zum zweiten Regelsystem 70 mit einem verringertem hydraulischen Aufwand und einem vergleichsweise erhöhtem Aufwand an Sensorik. Das dritte Regelsystem 90 weist ein elektrohydraulisches, proportional arbeitendes 3/3-Regelventil 91 auf, das über die Leitung 35 die Druckräume 29 beider Hydrozylinder 28 und 38 steuert. In die beide Druckräume 29 verbindende Querleitung 39 ist ein magnetisch betätigbares 2/2-Sperrventil 92 geschaltet. Zusätzlich zu den Drucksensoren 34, 73 sind die Hydrozylinder 28 und 38 jeweils über einen elektromechanischen Kraftmeßbolzen 93 bzw. 94 an der Vorderachse 26 abgestützt, wobei deren elektrische Ausgangssignale dem als Regler arbeitenden elektronischen Steuergerät 95 zugeführt werden. Ferner ist am Fahrzeugrahmen 14 zusätzlich ein elektromechanischer Beschleunigungssensor 96 angeordnet, der seine schwingungsabhängigen Signale ebenfalls an das elektronische Steuergerät 95 weiterführt.

Die Wirkungsweise des dritten elektrohydraulischen Regelsystems 90 entspricht hinsichtlich der aktiven Schwingungsdämpfung weitgehend derjenigen des zweiten Regelsystems 70 nach Figur 3, wobei jedoch für die Ermittlung des jeweiligen Schwingungszustandes neben den Drucksensoren 34, 73, nun auch die in den Kraftfluß zwischen Fahrzeugrahmen 14 und Vorderachse 26 geschalteten Kraftmeßbolzen 93, 94 zur Verfügung stehen und darüber hinaus der Schwingungszustand auch durch eine Beschleunigungsmessung im Sensor 96 ermittelt werden kann. Die Signale der Sensoren für Druck, Kraft bzw. Beschleunigung können gemeinsam, alternativ oder in gemischter Form im elektronischen Steuergerät 95 verarbeitet werden.

Bei der hydropneumatisch gefederten Vorderachse 26 des dritten Regelsytems 90 können durch unterschiedliches Schalten der Magnetventile 33, 72 und des Sperrventils 92 unterschiedliche Charakteristiken für die Vorderachse 26 erreicht werden. Werden alle drei vom Steuergerät 95 magnetisch ansteuerbaren Ventile 33, 72, 92 gesperrt, so kann die Vorderachse 26 die Charakteristik einer starren Achse aufweisen. Wird lediglich das Sperrventil 92 geöffnet, so kann die Vorderachse die Eigenschaften einer Pendelachse erreichen. Werden die beiden Magnetventile 33, 72 aufgesteuert, so hat die Vorderachse 26 die Charakteristik einer gefederten Achse.

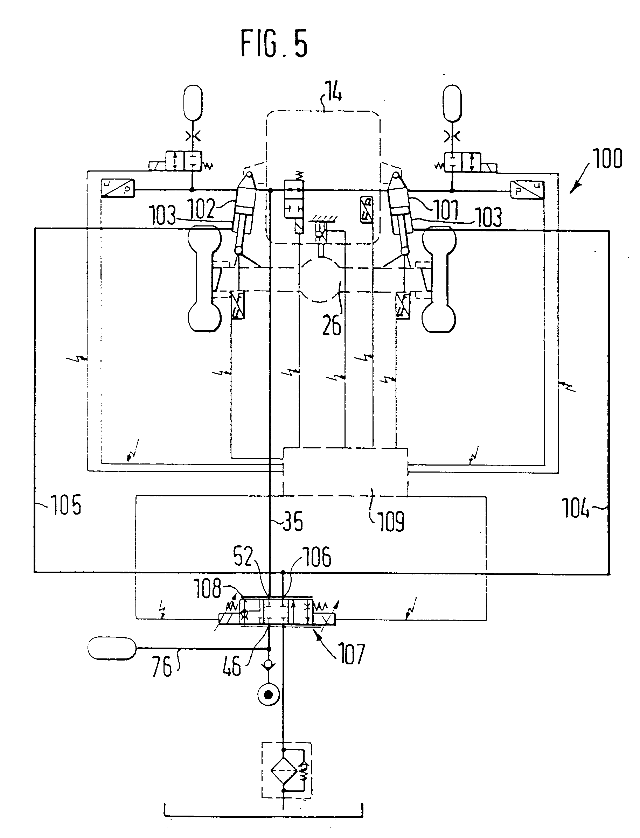

Die Figur 5 zeigt als zusätzliche Ausführungsform ein viertes elektrohydraulisches Regelsystem 100, das sich von dem dritten Regelsystem 90 nach Figur 4 wie folgt unterscheidet, wobei für gleiche Bauelemente gleiche Bezugszeichen verwendet werden. Bei dem vierten Regelsystem 100 sind die Stellglieder der hydropneumatischen Federung der Vorderachse 26 als doppeltwirkende Hydrozylinder 101, 102 ausgebildet, deren jeweiligen Ringräume 103 jeweils über eine Nebenleitung 104 bzw. 105 parallel an einen zweiten Motoranschluß 106 eines 4/3-Regelventils 107 angeschlossen sind. Dieses Regelventil 107 wird wieder von dem Konstantdrucknetz 76 mit Druckmittel versorgt. Das Regelventil 107 weist eine dem Senken des Fahrzeugrahmens 14 relativ zur Vorderachse 26 zugeordnete Arbeitsstellung 108 auf, bei der die beiden Motoranschlüsse 52 und 106 miteinander und zusammen gedrosselt mit dem Zulaufanschluß 46 Verbindung haben.

Diese Maßnahme hat den Vorteil, daß in Verbindung mit der Ausbildung der Stellglieder als Differentialzylinder bei Senkbewegung des Fahrzeugrahmens 14 Druckmittel in das Konstantdrucknetz 76 zurückgeführt werden kann und dadurch die Nickbewegungen des Fahrzeugrahmens 14 für eine Energie-Rückgewinnung ausgenutzt werden. Im übrigen hat die Verwendung der doppelt wirkenden Hydrozylinder 101, 102 den Vorteil, daß die Vorderachse 26 hydraulisch sicher eingespannt ist und daß dadurch die aktive Schwingungsdämpfung wirksamer durchgeführt werden kann, weil dämpfende Kräfte in beiden Richtungen übertragen werden können. Das vierte Regelsystem 100 weist zu diesem Zweck ein als Regler arbeitendes elektronisches Steuergerät 109 auf, das sich für diese Arbeitsweise eignet.

Selbstverständlich sind an dem Traktor 10 mit den gezeigten Regelsystemen zur aktiven Schwingungstilgung Änderungen möglich, ohne vom Gedanken der Erfindung abzuweichen. So kann das Regelsystem zur Schwingungstilgung vor allem dort angewandt werden, wo eine Achse des Fahrzeugs ungefedert ist, und dabei schlechte Dämpfungseigenschaften aufweist. Auch können für das Regelsystem zur Schwingungstilgung zusätzlich oder alternativ Signale verwendet werden, die am Heck des Traktors ermittelt werden wie z.B. Kräfte im Dreipunktgestänge, Druck im Kraftheber etc.. Dies ist besonders dann interessant, wenn solche Sensoren ohnedies bereits vorhanden sind. Auch sind die aufgezeigten Regelsysteme zur aktiven Schwingungstilgung nicht auf den gezeigten Traktor begrenzt, sondern können auch bei Bedarf bei Mähdreschern, Baumaschinen und vergleichbaren Fahrzeugen, vorteilhaft angewandt werden; dies gilt insbesondere für den Radlader, wo vergleichbare Probleme wie beim Traktor auftreten können, wenn die meist gleichgroßen, großvolumigen Reifen der vier Räder infolge ihrer schlechten Dämpfung und einer ungefederten Achse leicht zu Schwingungen des Fahrzeugs führen.

## Patentansprüche

1. Landwirtschaftlich nutzbare Zugmaschine, insbesondere Traktor (10) oder Baumaschinen-Fahrzeug, mit einem am Fahrzeug angelenkten Hubwerk (11), das über einen Kraftheber heb- und senkbar ist, mit einer Vorderachse (26) und mit einem Regelsystem zur dynamische Stabilisierung von Nickschwingungen des Fahrzeugs um eine im wesentlichen horizontale Schwingungsachse, wobei dieses Regelsystem eine beweglich am Fahrzeugrahmen (14) angelenkte, als Tilgermasse wirkende Masse und eine elektrohydraulische Regeleinrichtung umfaßt, die abhängig von den Signalen eines diese Schwingbewegungen erfassenden Sensors die Masse derart steuert, daß angeregte Schwingungen des Fahrzeugs aktiv abgebaut werden, dadurch gekennzeichnet, daß die beweglich am Fahrzeugrahmen (14) angelenkte Tilgermasse die Vorderachse (26) ist, und daß die Vorderachse (26) am Fahrzeugrahmen (14) über eine hydropneumatische Federung (27) abgestützt ist, die wenigstens ein hydraulisches Stellglied (28, 38) aufweist, das von dem elektrohydraulischen Regelsystem (61, 70, 90, 100) verstellbar ist.

2. Zugmaschine nach Anspruch 1, dadurch gekennzeichnet, daß der Sensor (34, 73, 93, 94) so angeordnet ist, daß er von den Schwingungen der Vorderachse (26) relativ zum Fahrzeugrahmen (14) abhängige Signale liefert.

3. Zugmaschine nach Anspruch 1 oder 2, dadurch gekennzeichnet, daß als Sensor wenigstens ein Kraftmeßbolzen (93, 94) verwendet wird, der in den Kraftfluß zwischen Fahrzeugrahmen (14) über das hydraulische Stellglied (29, 38) zur Vorderachse (26) geschaltet ist.

4. Zugmaschine nach Anspruch 1 oder 2, dadurch gekennzeichnet, daß als Sensor wenigstens ein elektrohydraulischer Drucksensor (34, 73) verwendet wird, der den Druck im hydraulischen Stellglied (28; 38; 101) abgreift.

5. Zugmaschine nach einem der Ansprüche 1 bis 4, dadurch gekennzeichnet, daß die Signale von einem Beschleunigungssensor (96) erzeugt werden, der insbesondere am Fahrzeugrahmen (14), vorzugsweise im Bereich der Vorderachse (26), angeordnet ist.

6. Zugmaschine nach einem der Ansprüche 1 bis 5, dadurch gekennzeichnet, daß die Signale von einem Sensor (23) erzeugt werden, der in einem Kraftregelkreis des angelenkten Hubwerks (11) liegt.

7. Zugmaschine nach einem der Ansprüche 1 bis 6, dadurch gekennzeichnet, daß ein die Lage der Vorderachse (26) relativ zum Fahrzeugrahmen (14) abgreifender Wegaufnehmer (41) angeordnet ist, der in einen überlagerten Lageregelkreis geschaltet ist.

8. Zugmaschine nach einem der vorhergehenden Ansprüche, dadurch gekennzeichnet, daß die hydropneumatische Federung (27) als Stellglied für jedes Rad (36, 37) einen zugeordneten Hydrozylinder (38, 38; 101, 102) aufweist.

9. Zugmaschine nach Anspruch 8, dadurch gekennzeichnet, daß die Hydrozylinder (28, 38) einfachwirkend ausgebildet sind.

10. Zugmaschine nach Anspruch 8, dadurch gekennzeichnet daß die Hydrozylinder (101, 102) doppeltwirkend ausgebildet sind.

11. Zugmaschine nach einem oder mehreren der Ansprüche 1 bis 10, dadurch gekennzeichnet, daß bei jedem Stellglied (28, 38) in die hydraulische Verbindung (31) zwischen dem Hydrozylinder (28, 38) und dem als Federelement dienenden, zugeordneten Energiespeicher (32, 71) ein Magnetventil (33, 72) geschaltet ist.

12. Zugmaschine nach Anspruch 11, dadurch gekennzeichnet, daß die beiden Hydrozylinder (28, 38; 101, 102) der Vorderachse (26) gemeinsam von einem Regelventil (18; 91; 107) ansteuerbar sind und daß insbesondere zwischen beide Hydrozylinder (28, 38; 101, 102) ein elektromagnetisch betätigbares Sperrventil (92) geschaltet ist.

13. Zugmaschine nach Anspruch 11, dadurch gekennzeichnet, daß jeder Hydrozylinder (28, 38) der Vorderachse (26) über ein gesondertes Regelventil (18, 75) ansteuerbar ist und daß insbesondere für beide Räder (36, 37) jeweils eigene Sensoren (34, 72; 94) vorgesehen sind.

14. Zugmaschine nach einem oder mehreren der Ansprüche 1 bis 13, dadurch gekennzeichnet, daß der Steuerung des Hubwerks (11, 15) und der Steuerung der Stellglieder (28, 38) an der Vorderachse (26) das gleiche Regelventil (18) zugeordnet ist (Figur 2).

15. Zugmaschine nach Anspruch 10, dadurch gekennzeichnet, daß das Regelventil (107) als 4/Wegeventil ausgebildet ist, bei dem in einer Arbeitsstellung (108) für Senken des Fahrzeugrahmens (14) beide Motoranschlüsse (52, 106) miteinander und mit dem Zulaufanschluß (46) verbunden sind, der mit einem Hydrospeicher (77) in Verbindung steht.

16. Zugmaschine nach einem oder mehreren der Ansprüche 1 bis 15, dadurch gekennzeichnet, daß deren Hinterachse (25) ungefedert ausgebildet ist.

17. Zugmaschine nach einem der Ansprüche 1 bis 15, dadurch gekennzeichnet, daß die andere Achse gefedert ausgebildet ist.

## Claims

1. Towing vehicle utilizable in agriculture, particularly a tractor (10) or building machine vehicle, having lifting gear (11) which is pivoted on the vehicle and which can be raised and lowered by means of a power lift, also having a front axle (26) and having an automatic control system for the dynamic stabilization of pitching oscillations of the vehicle about a substantially horizontal oscillation axis, said automatic control system comprising a mass movably pivoted on the vehicle frame (14) and acting as eradicator mass, and comprising an electrohydraulic automatic control device which controls the mass in dependence on the signals of a sensor, which detects these oscillatory movements, in such a manner that oscillations produced in the vehicle are actively dissipated, characterized in that the eradicator mass movably pivoted on the vehicle frame (14) is the front axle (26), and in that the front axle (26) is supported on the vehicle frame (14) by means of a hydropneumatic suspension (27) which has at least one hydraulic final control element (28, 38) which can be adjusted by the electrohydraulic automatic control system (61, 70, 90, 100).

2. Towing vehicle according to Claim 1, characterized in that the sensor (34, 73, 93, 94) is so arranged that it supplies signals dependent on the oscillations of the front axle (26) relative to the vehicle frame (14).

3. Towing vehicle according to Claim 1 or 2, characterized in that the sensor used comprises at least one force measuring pin (93, 94), which is inserted in the force flow from the vehicle frame (14) via the hydraulic final control element (29, 38) to the front axle (26).

4. Towing vehicle according to Claim 1 or 2, characterized in that the sensor used comprises at least one electrohydraulic pressure sensor (34, 73) which detects the pressure in the hydraulic final control element (28; 38; 101).

5. Towing vehicle according to one of Claims 1 to 4, characterized in that the signals are produced by an acceleration sensor (96) which is arranged in particular on the vehicle frame (14), preferably in the region of the front axle (26).

6. Towing vehicle according to one of Claims 1 to 5, characterized in that the signals are produced by a sensor (23) which is disposed in a force control circuit of the pivoted lifting gear (11).

7. Towing vehicle according to one of Claims 1 to 6, characterized in that a displacement transducer (41) is provided which detects the position of the front axle (26) relative to the vehicle frame (14), and which is connected in a superimposed position control circuit.

8. Towing vehicle according to one of the preceding claims, characterized in that the hydropneumatic suspension (27) has an associated hydraulic cylinder (28, 38; 101, 102) as final control element for each wheel (36, 37).

9. Towing vehicle according to Claim 8, characterized in that the hydraulic cylinders (28, 38) are of single-acting design.

10. Towing vehicle according to Claim 8, characterized in that the hydraulic cylinders (101, 102) are of double-acting design.

11. Towing vehicle according to one or more of Claims 1 to 10, characterized in that for each final control element (28, 38) a solenoid valve (33, 72) is inserted into the hydraulic connection (31) between the hydraulic cylinder (28, 38) and the associated energy storage means (32, 71) serving as spring element.

12. Towing vehicle according to Claim 11, characterized in that the two hydraulic cylinders (28, 38; 101, 102) of the front axle (26) can be actuated conjointly by a control valve (18; 91; 107), and in that an electromagnetically actuatable shut-off valve (92) is inserted in particular between the two hydraulic cylinders (28, 38; 101, 102).

13. Towing vehicle according to Claim 11, characterized in that each hydraulic cylinder (28, 38) of the front axle (26) can be actuated by means of a separate control valve (18, 75), and in that in particular the two wheels (36, 37) are each provided with their own sensors (34, 72; 94).

14. Towing vehicle according to one or more of Claims 1 to 13, characterized in that the same control valve (18) is assigned to the control of the lifting gear (11, 15) and the control of the final control elements (28, 38) on the front axle (26) (Figure 2).

15. Towing vehicle according to Claim 10, characterized in that the control valve (107) is in the form of a four-way valve in which in a working position (108) for the lowering of the vehicle frame (14) the two motor connections (52, 106) are connected to one another and to the admission connection (46) which is in communication with a hydraulic accumulator (77).

16. Towing vehicle according to one or more of Claims 1 to 15, characterized in that its rear axle (25) is of unsprung design.

17. Towing vehicle according to one of Claims 1 to 15, characterized in that the other axle is of sprung design.

## Revendications

1. Engin de traction pouvant être utilisé en agriculture, en particulier tracteur (10) ou engin de chantier automobile, avec un levage (11) articulé sur le véhicule, qui peut être soulevé ou abaissé par un système de levage, avec un essieu avant (26) et avec un système de réglage servant à la stabilisation dynamique des oscillations de tangage du véhicule autour d'un axe d'oscillation sensiblement horizontal, dans lequel le système de régulation comprend une masse agissant comme masse d'amortissement et un système électrohydraulique de réglage qui, en fonction des signaux d'un capteur détectant les mouvements d'oscillation, commande la masse de telle façon que les oscillations développées par le véhicule soient activement réduites, engin de traction caractérisé en ce que la masse d'amortissement articulée de façon mobile sur le châssis de véhicule (14) est l'essieu avant (26), et en ce que l'essieu avant (26) est monté sur le châssis de véhicule (14) au moyen d'une suspension hydropneumatique (27) qui présente au moins un cylindre hydraulique (28, 38), pouvant être réglé par le système de réglage électrohydraulique (61, 70, 90, 100).

2. Engin de traction selon la revendication 1, caractérisé en ce que le capteur (34, 73, 93, 94) est disposé de telle façon qu'il délivre des signaux qui sont fonction des oscillations de l'essieu avant (26) par rapport au châssis de véhicule (14).

3. Engin de traction selon la revendication 1 ou 2, caractérisé en ce que l'on utilise comme capteur au moins un boulon dynamométrique (93, 94) qui est monté dans le flux des forces entre le châssis de véhicule (14) sur le cylindre hydraulique (29, 38) de réglage allant à l'essieu avant (26).

4. Engin de traction selon la revendication 1 ou 2, caractérisé en ce que l'on utilise comme capteur au moins un capteur de pression électrohydraulique (34, 73), qui enregistre la pression dans l'organe hydraulique de réglage (28 ; 38 ; 101).

5. Engin de traction selon l'une des revendications 1 à 4, caractérisé en ce que les signaux sont produits par un capteur d'accélération (96) qui est de préférence disposé sur le châssis de véhicule (14) dans la zone de l'essieu avant (26).

6. Engin de traction selon l'une des revendications 1 à 5, caractérisé en ce que les signaux sont produits par un capteur (23) qui se trouve dans un circuit de réglage des forces du levage articulé (11).

7. Engin de traction selon l'une des revendications 1 à 6, caractérisé en ce que l'on dispose d'un enregistreur de course (41) qui détecte la position de l'essieu avant (26) par rapport au châssis de véhicule (14), enregistreur (41) qui est monté dans un circuit de réglage de position superposé.

8. Engin de traction selon l'une des revendications précédentes, caractérisé en ce que la suspension hydropneumatique (27) présente comme organe de réglage pour chaque roue (36, 37), un cylindre hydraulique associé (28, 38 ; 101, 102).

9. Engin de traction selon la revendication 8, caractérisé en ce que les cylindres hydrauliques (28, 38) sont à simple effet.

10. Engin de traction selon la revendication 8, caractérisé en ce que les cylindres hydrauliques (101, 102) sont à double effet.

11. Engin de traction selon l'une ou plusieurs des revendications 1 à 10, caractérisé en ce que dans chaque organe de réglage (28, 38) on monte dans la liaison hydraulique (31) comprise entre le cylindre hydraulique (28, 38) et l'accumulateur d'énergie (31, 71) associé, une électrovanne (33, 72)) qui sert d'élément élastique de suspension).

12. Engin de traction selon la revendication 11, caractérisé en ce que les deux cylindres hydrauliques (28, 38 ; 101, 102) de l'essieu avant (26) peuvent être commandés en commun par une vanne de réglage (18 ; 91 ; 107), et en ce qu'en particulier on monte entre les deux cylindres hydrauliques (28, 38 ; 101, 102) une vanne d'arrêt (92) qui peut être actionnée de façon électromagnétique.

13. Engin de traction selon la revendication 11, caractérisé en ce que chaque cylindre hydraulique (28, 38) de l'essieu avant (26) peut être commandé au moyen d'une vanne de réglage particulière (18, 75), et en ce qu'en particulier on prévoit pour les deux roues (36, 37) respectivement des capteurs (34, 72 ; 94) qui leur sont propres.

14. Engin de traction selon l'une ou plusieurs des revendications 1 à 13, caractérisé en ce qu'à la commande du levage (11, 15) et à la commande des organes de réglage (28, 38) sur l'essieu avant (26), est associée la même vanne de réglage (18) (figure 2).

15. Engin de traction selon la revendication 10, caractérisé en ce que la vanne d'arrêt (107) est constituée comme un distributeur à 4 voies dans le cas duquel, quand le châssis de véhicule (14) est abaissé en position de travail (108), les deux raccords au moteur (52, 106) sont reliés entre eux et au raccord d'arrivée (46) qui est en liaison avec un accumulateur hydraulique (77).

16. Engin de traction selon l'une ou plusieurs des revendications 1 à 15, caractérisé en ce que son essieu arrière (25) est monté sans suspension élastique.

17. Engin de traction selon l'une des revendications 1 à 15, caractérisé en ce que l'autre essieu est monté avec une suspension élastique.
